(19) Europäisches Patentamt
European Patent Office
Office européen des brevets

(11) EP 0 501 069 B1

(12) **EUROPEAN PATENT SPECIFICATION**

(45) Date of publication and mention
of the grant of the patent:
**29.01.1997 Bulletin 1997/05**

(51) Int Cl.[6]: **C09K 7/02**, C09K 3/00

(21) Application number: **91310865.0**

(22) Date of filing: **26.11.1991**

(54) **Pseudoplastic mixed metal layered hydroxide fluid with fluid loss additive and method of use in penetrating the earth**

Pseudoplastische, in Lagen gemischte Metalle enthaltende Hydroxidflüssigkeit mit Flüssigkeitsverlustsadditiv und Anwendungsverfahren bei Erdbohrungen

Fluide pseudoplastique contenant des hydroxydes métalliques mixtes disposés en couches, avec additif de contrôle de perte de fluide et méthode d'utilisation pour des forages

(84) Designated Contracting States:
**AT DE DK ES FR GB GR IT NL**

(30) Priority: **28.02.1991 US 662264**

(43) Date of publication of application:
**02.09.1992 Bulletin 1992/36**

(73) Proprietor: **Sofitech N.V.**
**B-1180 Brussels (BE)**

(72) Inventors:
• **Fraser, Lindsay J.**
**Katy, Texas 77494 (US)**
• **Burba III, John L.**
**Lake Jackson, Texas 77566 (US)**

(74) Representative: **Smith, Norman Ian et al**
**F.J. CLEVELAND & COMPANY**
**40-43 Chancery Lane**
**London WC2A 1JQ (GB)**

(56) References cited:
EP-A- 0 058 917        EP-A- 0 207 810
EP-A- 0 260 538        US-A- 2 571 093
US-A- 4 123 366        US-A- 4 310 425
US-A- 4 422 947

## Description

The present invention relates to an improved fluid loss control additive composition which is particularly useful with drilling fluids which contain one or more mixed metal layered hydroxide compounds. Here after the term "drilling fluid" shall be taken to refer specifically to fluids containing at least one mixed metal layered hydroxide compound. Such drilling fluids may also contain a variety of commonly used chemicals such as, but not limited to, weighting agents, defoamers, shale inhibitors, corrosion inhibitors, and the like.

The use of mixed metal hydroxide materials as gelling agents in drilling fluids is known from the prior art, J. L. Burba et al U. S. Patent Nos. 4,664,843 and 4,790,954, the teachings of which are expressly incorporated herein. The Burba et al patents disclose a new and useful material composition for use in drilling fluids. However, when they are used in drilling situations requiring a fluid loss control additive, difficulties may be encountered. For example, the use of certain carboxymethyl cellulosic polymers caused somewhat detrimental effects on the rheology of the drilling fluid, e.g., lower shear viscosity resulting in decreased solids transporting capacity. Commonly available unsubstituted starches which are used regularly in conventional drilling fluids are compatible. They are, however, only partially effective, and ferment readily in aqueous suspensions of bentonite clays containing mixed metal layered hydroxides.

According to the present invention there is provided a drilling fluid, a method of preparing a drilling fluid and a method of penetration as defined in the accompanying claims.

The drilling fluid of the present invention seeks to provide filtration control in the drilling fluid without substantially altering the desirable rheological characteristics of such fluids. Thus the present invention comprises a carboxymethylated starch or carboxymethylated cellulosic having a controlled degree of substitution. Such materials have particular application in drilling fluids. The preferred composition of the improved fluid loss control additive includes carboxymethylated starch, which does not cause settling of the weight material and does not change the rheology of the drilling fluid beyond acceptable limits.

The particular fluid loss control additives which can be used in the improved composition of the present invention include carboxymethylated starches where the starch source may be a crosslinked vegetable starch, such as potato, rice, corn, maize, or other starch containing products or carboxymethyl cellulose or an uncrosslinked vegetable starch as set forth above and where the crosslinked vegetable starch has a degree of substitution in the broad range of about 0.3 to about 0.8 and preferably in the narrow range of about 0.4 to about 0.7; and where the uncrosslinked vegetable starch and the carboxymethylcellulose have a degree of substitution in the broad range of about 0.3 to 0.57 and preferably in the narrow range of about 0.3 to 0.4. As used herein, the term "uncrosslinked" is intended to mean that the material is substantially free of crosslinking. The starches may be crosslinked or not as desired. Such compositions are suitable for aqueous based drilling fluids since they do not readily ferment and do not change, to an unacceptable degree, the rheology of the drilling fluid.

An object of the present invention is to provide an improved composition to be used with a drilling fluid to achieve filtration control in the drilling fluid without substantially altering the desirable rheological characteristics of the drilling fluid.

Another object is to provide an improved drilling fluid which includes mixed metal layered hydroxide compounds and a fluid loss control additive which does not change the rheological characteristics of the drilling fluid.

Still another object is to provide an improved method of drilling a well with a drilling fluid including the improved composition of the present invention which has mixed metal layered hydroxides and filtration control.

Another object is to provide an improved fluid loss additive for use in a fluid including layered mixed metal hydroxides.

A further object of this invention is to provide a drilling fluid containing at least one mixed metal layered hydroxide and a fluid loss additive, which fluid can be recovered, stored and/or transported to another well site and reused at a later date.

The use of the mixed metal layered hydroxides in combination with drilling fluid chemicals has been found to be advantageous. One difficulty which has been experienced is that strongly anionic fluid loss control agents cause deleterious effects on fluid rheology in these systems. Some additives such as unsubstituted starches can be utilized and do not significantly alter rheology. However, fermentation can occur causing high filtrate loss rates.

It has been discovered that fluid loss control additives which are within a specified range of composition may be used without deleterious effects on the fluid rheology and without resulting in substantial fermentation. Carboxymethylated starches and carboxymethyl cellulosics may be used provided their properties fall within the limits herein specified. The controlling factors in maintaining these properties are the degree of substitution of the fluid loss control additive and whether the fluid loss control additive is crosslinked. In using crosslinked vegetable starches the degree of substitution is maintained within a range from about 0.3 to about 0.8, the rheological characteristics and fermentation resistance are maintained. In using uncrosslinked vegetable starches and carboxymethyl cellulosics, the degree of substitution should be maintained within the range of about 0.3 to about 0.57. It is further preferred that in situations where there is any doubt, the range may be narrowed to about 0.4 to about 0.7 for cross linked vegetable starches and to about 0.4 to about 0.5 for uncrosslinked vegetable starches and carboxymethyl cellulosics to ensure that the rate of filtration loss and the rheology of the drilling fluid are maintained within the desired limits.

Rheological measurements were made in accordance with API-RP-13B-1 section 2 and filtrate loss rate measurements were made in accordance with API-RP-13B-1 section 3.

Mixed metal layered hydroxide based drilling fluids containing unsubstituted starches as fluid loss control additives, in the absence of biocides, exhibited desirable viscosity readings initially and after a period of more than three weeks. However, over that period of time, fermentation was observed and filtrate loss rates increased from 6 ml/30 min. to greater than 70 ml/30 min.

Drilling fluids containing the improved composition of the present invention displayed desirable rheology over a three week test period and the filtrate loss rates, which were initially 6.6 ml/30 min. remained essentially constant (less than about 10ml/30 min) throughout the three week period.

The preferred composition was a cross linked carboxymethylated starch which had a degree of substitution, as calculated by the ASTM Designation: D 1439-83a, of 0.57.

The determination of the desired ranges of substitution to be used in the carboxymethylation of the fluid loss control additive material is a balance of the disadvantages between the change of the rheology and the onset of fermentation in the case of starches and solubility in the case of cellulosics.

Spot tests conducted have shown that as the degree of substitution in the carboxymethylation of the crosslinked starch is increased the amount of fermentation is reduced drastically, but the rheology of the drilling fluid will deteriorate also. By plotting the two curves the range which is acceptable to the particular application of the drilling fluid can be determined. For example, if an API fluid loss below 10 is acceptable, then in one particular test, the degree of substitution of the fluid loss control additive composition must be 0.50 or above and if the rheology (e.g. the viscosity reading at 3 and 6 rpm on the Fann Viscometer) above 10 is acceptable (with all other rheology factors taken into consideration) then in another test run jointly with the test mentioned above, the degree of substitution of the fluid loss control additive composition should be less than 0.70. In the determination of this degree of substitution all of the factors in the rheology of the drilling fluid after the addition of the fluid loss control additive are taken into consideration together with the potential for fermentation of the drilling fluid. Since it is the fermentation of the fluid loss additive composition that results in the substantial increase in the API fluid loss factor, the range of degree of substitution may be broadened by the inclusion of a small amount of a common bactericide such as paraformaldehyde, carbamates, isothiazoline, and other biocides. A similar result has been found with the uncrosslinked vegetable starches and carboxymethyl cellulosics in the ranges set out herein.

A fluid loss control additive material, such as a crosslinked vegetable starch (e.g. potato, corn, rice, maize, and the like) having a degree of carboxymethylation in the range of about 0.4 to about 0.7 is believed to be the optimum and for uncrosslinked vegetable starches and carboxymethyl cellulosic having a degree of carboxymethylation in the range of about 0.3 to about 0.57 is believed to be the optimum and preferred composition for a fluid loss control additive to be used with a mixed metal layered hydroxide based drilling fluid.

The improved drilling method includes the steps of operating a drill bit to cause penetration into the earth to form a well bore and circulating in the well bore a drilling fluid containing at least one mixed metal layered hydroxide and the fluid loss control additive composition of the present invention.

The following examples are to illustrate certain embodiments, but the invention is not limited to the particular embodiments shown. Those skilled in the art will recognize that the quantities of each component may be changed to meet immediate operational needs even as a drilling operation proceeds through different strata and subterranean conditions, and that other chemicals such as, but not limited to NaOH for pH control and $BaSO_4$ for density control may be added to the system. In expressing a metric equivalent, the following U.S. to metric conversion factors are used:

1 gal = 3.785 liters
1 lb = 0.454 kg
1 lb/gal = 119.83 $kg/m^3$
1 bbl = 42 gal
1 lb/bbl = 2.835 $kg/m^3$

EXAMPLE 1.

An aqueous drilling fluid illustrating the use of a crosslinked carboxymethylated vegetable starch in fresh water is prepared by the following procedure.

API grade sodium bentonite is dispersed into fresh water at a concentration of 7 lb per 42 gallon barrel (20 $kg/m^3$). The clay is allowed to hydrate for 8 to 24 hours. Mixed metal layered hydroxide powder, comprised of monolayer magnesium aluminum hydroxy chloride (having an empirical formula of $MgAl(OH)_{4.7}Cl_{0.3}$), glycerine and water, is dispersed in a small quantity of water. It is then dispersed into the clay mixture in a concentration of 0.7 lb powder per barrel (2 $kg/m^3$) with agitation. This mixture is then blended into the clay slurry to form a drilling fluid base of an aqueous reaction product of the mineral clay with the mixed metal layered hydroxide.

Crosslinked carboxymethylated potato starch, having a degree of substitution of 0.56, is added to the mixture at a level of about 2 lb per barrel (5.7 $kg/m^3$).

The resulting fluid has rheological properties that are adequate to clean highly deviated well bores (greater than 45° deviation from vertical), and suspend solids, while maintaining filtrate loss rates under 10 ml/30 min.

EXAMPLE 2.

An aqueous drilling fluid illustrating the use of a cellulosic fluid loss additive in fresh water is prepared by the procedure set forth in Example 1, except that in lieu of the starch, crosslinked carboxymethylated cellulose having a degree of substitution of 0.7 is added to the mixture at a concentration of about 2 lb per barrel (5.7 kg/m³).

The resulting fluid has reasonable rheological properties. However, the fluid will not perform as well as the fluid in the previous example. Filtrate loss rates will be less than 10 ml/30 min.

EXAMPLE 3.

An aqueous drilling fluid illustrating the use of a carboxymethylated vegetable starch in sea water is prepared by the following proceeding.

After hydration in fresh water, API grade sodium bentonite is dispersed into sea water at a concentration of 10 lb per 42 gallon barrel, (28.5 kg/m³). Mixed metal layered hydroxide powder, as described in Example 1, is dispersed in a small quantity of water for several minutes. It is then mixed into the dispersed clay at a level of 1.0 lb powder per bbl (2.853 kg/m³) with agitation. This mixture is then blended into the clay slurry.

Crosslinked carboxymethylated potato starch, having a degree of substitution of 0.56, is added to the mixture at a level of about 3 lb per barrel.

The resulting fluid has rheological properties that are adequate to clean highly deviated holes, and suspend solids, while maintaining filtrate loss rates under 10 ml/30 min.

EXAMPLE 4.

An aqueous drilling fluid illustrating the use of a carboxymethylated cellulosic compound in sea water is prepared by the procedure of Example 3, except that in lieu of the starch compound, crosslinked carboxymethylated cellulose having a degree of substitution of 0.7 is added to the mixture at a level of about 3 lb per barrel (8.6 kg/m³).

The resulting fluid has reasonable rheological properties. However, the fluid will not perform as well as the fluid in the previous example. Filtrate loss rates will be less than 10 ml/30 min.

**Claims**

1.  A drilling fluid comprising

(a) an aqueous suspension of an adduct or reaction product of at least one mineral clay with at least one mixed metal layered hydroxide, in an amount effective to impart preselected rheological properties to the fluid; and

(b) carboxymethyl compound;

characterised in that said carboxymethyl compound is selected from:

(1) at least one carboxymethyl substituted vegetable starch, substantially free of crosslinking, having a degree of substitution of from about 0.3 to about 0.57,
(2) at least one crosslinked carboxymethyl substituted vegetable starch having a degree of substitution of from about 0.3 to about 0.8,
(3) at least one carboxymethylated cellulosic compound having a degree of substitution of from about 0.3 to about 0.8, and
(4) mixtures thereof.

2.  A drilling fluid according to claim 1 wherein the degree of carboxymethyl substitution is from about 0.4 to about 0.5 for the substituted vegetable starch substantially free of crosslinking, or to about 0.7 for the crosslinked carboxymethyl substituted vegetable starch and the carboxymethylated cellulosic compound.

3.  A drilling fluid according to claim 1 or claim 2 wherein the fluid loss additive is at least one carboxymethylated cellulosic compound.

4.  A drilling fluid according to claim 1 or claim 2 wherein the fluid loss additive is at least one carboxymethylated vegetable starch.

5.  A drilling fluid according to claim 4 wherein the carboxymethyl substituted vegetable starch, crosslinked or substantially free of crosslinking, is carboxymethylated potato starch, carboxymethylated corn starch, carboxymethylated rice starch, or carboxymethylated maize starch and mixtures thereof.

6.  A drilling fluid according to claim 4 or claim 5 wherein the carboxymethyl substituted vegetable starch is substantially free of crosslinking.

7.  A drilling fluid according to claim 4 or claim 5 wherein the carboxymethyl substituted vegetable starch is crosslinked.

8.  A drilling fluid according to any of claims 1 to 7 wherein the clay is sodium bentonite; the mixed metal layered hydroxide includes glycerine or polyglycol in an amount sufficient to aid in dispersing the particulate mixed metal layered hydroxide in water, and the mixed metal layered hydroxide itself corresponds to the formula:

$$Li_m D_d T(OH) (m+2d+3+na)A_a^n$$

where

m   is an amount of Li in the range of 0 to about 1
D   is a divalent metal ion, and d is an amount of D in the range of zero to about 4;
T   is a trivalent metal ion;
A   represents monovalent or polyvalent anions of valence -n, with a being the amount of A anions;

(m+d) is greater than zero and (m+2d+3+na) is equal to or greater than 3.

9.   A drilling fluid according to any of claims 1 to 8 further comprising a bactericidal amount of paraformaldehyde, a carbamate bactericide, isothiazoline, or a mixture thereof.

10.  A method of preparing a drilling fluid comprising

(a) dispersing at least one mineral clay into an agitated aqueous fluid to form a first dispersion;
(b) permitting the clay to hydrate in the first dispersion;
(c) reacting at least one mixed metal layered hydroxide with the hydrated clay to form a drilling fluid base of an aqueous reaction product of the mineral clay with the mixed metal layered hydroxide; and
(d) dispersing into the drilling fluid base a carboxymethyl compound as a fluid loss additive; characterised in that said carboxymethyl compound is selected from:-

(1) at least one carboxymethyl substituted vegetable starch, substantially free of crosslinking, having a degree of substitution of from about 0.3 to about 0.57,
(2) at least one crosslinked carboxymethyl substituted vegetable starch having a degree of substitution of from about 0.3 to about 0.8,
(3) at least one carboxymethylated cellulosic compound having a degree of substitution of from about 0.3 to about 0.8 and
(4) mixtures thereof.

11.  A method according to claim 10 wherein step (c) is carried out by

(i) dispersing at least one mixed metal layered hydroxide in particulate form into an aqueous fluid, separate from the first dispersion formed in step (a);
(ii) permitting the dispersed mixed metal layered hydroxide to hydrate; and
(iii) admixing the hydrated mixed metal layered hydroxide dispersion with the hydrated clay first dispersion to form a drilling fluid base of an aqueous reaction product of the mineral clay with the mixed metal layered hydroxide.

12.  A method according to claim 11 wherein the particulate mixed metal layered hydroxide includes at least one hydrophilic organic compound in an amount sufficient to aid in dispersing the particulate mixed metal layered hydroxide in water.

13.  A method according to claim 10, claim 11 or claim 12 wherein the degree of carboxymethyl substitution is from about 0.4 to about 0.5 for the substituted vegetable starch substantially free of crosslinking, or to about 0.7 for the crosslinked carboxymethyl substituted vegetable starch and the carboxymethylated cellulosic compound.

14.  A method according to any of claim 10 to 13 wherein the fluid loss additive is at least on carboxymethylated cellulosic compound.

15.  A method according to any of claim 10 to 13 wherein the fluid loss additive is at least one carboxymethylated vegetable starch.

16.  A method according to claim 15 wherein the carboxymethyl substituted vegetable starch, crosslinked or substantially free of crosslinking, is carboxymethylated potato starch, carboxymethylated corn starch, carboxymethylated rice starch, or carboxymethylated maize starch and mixtures thereof.

17.  A method according to claim 14 or claim 15 wherein the carboxymethyl substituted vegetable starch is substantially free of crosslinking.

18.  A method according to claim 14 or claim 15 wherein the carboxymethyl substituted vegetable starch is crosslinked.

19.  A method according to any of claims 10 to 18 wherein the clay is sodium bentonite; the mixed metal layered hydroxide includes glycerine or polyglycol in an amount sufficient to aid in dispersing the particulate mixed metal layered hydroxide in water, and the mixed metal layered hydroxide itself corresponds to the formula:

$$Li_m D_d T(OH)(m+2d+3+na) A_a^n$$

where

m   is an amount of Li in the range of 0 to about 1

D   is a divalent metal ion, and d is an amount of D in the range of zero to about 4;

T   is a trivalent metal ion;

A   represents monovalent or polyvalent anions of valence -n, with a being the amount of A anions;

(m+d) is greater than zero and (m+2d+3+na) is equal to or greater than 3;

20. A method according to any of claims 10 to 19 wherein the drilling fluid further comprises a bactericidal amount of paraformaldehyde, a carbamate bactericide, isothiazoline, or a mixture thereof.

21. A penetrating method of penetrating the earth including the steps of

(a) operating a drill bit to cause penetration of the earth to form a borehole, and
(b) circulating into the borehole a drilling fluid as claimed in any of claim 1 to 9.

22. A penetrating method according to claim 21 wherein the borehole is well bore.

23. A penetrating method according to claim 22 wherein at least a portion of the well bore is deviated at an angle greater than 45° from vertical.

24. A penetrating method according to claim 23 wherein at least a portion of the borehole is greater than 45° from vertical.

25. A penetrating method according to any of claim 21 to 24 including recovering at lest a portion of the drilling fluid after use in a first well bore and reusing the recovered drilling fluid at a later date on a second well remote from the first well.

**Patentansprüche**

1. Bohrspülmittel, das enthält:

(a) eine wäßrige Suspension eines Addukts oder eines Reaktionsprodukts mindestens eines mineralischen Tons mit mindestens einem gemischten Metallhydroxid mit Schichtstruktur in einer Menge, die wirksam ist, um der Flüssigkeit vorgewählte rheologische Eigenschaften zu verleihen, und

(b) eine Carboxymethylverbindung,

dadurch gekennzeichnet, daß die Carboxymethylverbindung ausgewählt ist unter:

(1) mindestens einer carboxymethylierten pflanzlichen Stärke, die im wesentlichen vernetzungsfrei ist und einen Substitutionsgrad von etwa 0,3 bis etwa 0,57 aufweist,

(2) mindestens einer vernetzten carboxymethylierten pflanzlichen Stärke, die einen Substitutionsgrad von etwa 0,3 bis etwa 0,8 aufweist,

(3) mindestens einer carboxymethylierten Celluloseverbindung, die einen Substitutionsgrad von etwa 0,3 bis etwa 0,8 aufweist, und

(4) Gemischen davon.

2. Bohrspülmittel nach Anspruch 1, wobei der Carboxymethyl-Substitutionsgrad von carboxymethylierter pflanzlicher Stärke, die im wesentlichen vernetzungsfrei ist, etwa 0,4 bis etwa 0,5 und der Carboxymethyl-Substitutionsgrad von vernetzter carboxymethylierter pflanzlicher Stärke und carboxymethylierter Celluloseverbindung etwa 0,7 betragen.

3. Bohrspülmittel nach Anspruch 1 oder 2, bei dem das Additiv zur Kontrolle von Spülmittelverlusten mindestens eine carboxymethylierte Celluloseverbindung ist.

4. Bohrspülmittel nach Anspruch 1 oder 2, bei dem das Additiv zur Kontrolle von Spülmittelverlusten mindestens eine carboxymethylierte pflanzliche Stärke ist.

5. Bohrspülmittel nach Anspruch 4, bei dem die carboxymethylierte pflanzliche Stärke, die vernetzt oder im wesentlichen vernetzungsfrei ist, carboxymethylierte Kartoffelstärke, carboxymethylierte Weizenstärke, carboxymethylierte Reisstärke oder carboxymethylierte Maisstärke und oder ein Gemisch davon darstellt.

6. Bohrspülmittel nach Anspruch 4 oder 5, wobei die mit Carboxymethyl substituierte pflanzliche Stärke im wesentlichen vernetzungsfrei ist.

7. Bohrspülmittel nach Anspruch 4 oder 5, wobei die mit Carboxymethyl substituierte pflanzliche Stärke vernetzt ist.

8. Bohrspülmittel nach einem der Ansprüche 1 bis 7, wobei der Ton Natriumbentonit ist und das gemischte Metallhydroxid mit Schichtstruktur Glycerin oder Polyglycol in einer Menge enthält, die ausreichend ist, um die Teilchen des gemischten Metallhydroxids mit Schichtstruktur in Wasser zu dispergieren, wobei das gemischte Metallhydroxid mit Schichtstruktur seinerseits der Formel

$$Li_m D_d T(OH)_{(m+2d+3+na)} A_a^n$$

entspricht, wobei bedeuten:

m   eine Menge Li in Bereich von Null bis etwa 1,

D   ein zweiwertiges Metallion und d eine Menge von D im Bereich von Null bis etwa 4,

T   ein dreiwertiges Metallion
und

A   einwertige oder mehrwertige Anionen einer Wertigkeit von -n, wobei a die Menge der Anionen A bedeutet,

wobei

(m+d)   größer als Null und (m+2d+3+na) gleich oder größer als 3 sind.

9.  Bohrspülmittel nach einem der Ansprüche 1 bis 8, das ferner eine bactericid wirksame Menge Paraformaldehyd, eines Carbamat-Bactericids, Isothiazolin oder eines Gemisches davon enthält.

10. Verfahren zur Herstellung eines Bohrspülmittels mit folgenden Schritten:

(a) Dispergieren mindestens eines mineralischen Tons in einer wäßrigen Flüssigkeit unter Rühren, um eine erste Dispersion zu bilden,

(b) Hydratisierenlassen des Tons in der ersten Dispersion,

(c) Umsetzen mindestens eines gemischten Metallhydroxids mit Schichtstruktur mit dem hydratisierten Ton unter Erhalt einer Bohrspülmittelgrundlage aus einem wäß-rigen Reaktionsprodukt des mineralischen Tons mit dem gemischten Metallhydroxid mit Schichtstruktur und

(d) Dispergieren einer Carboxymethylverbindung im Bohrspülmittel als Additiv zur Kontrolle von Spülmittelverlusten,

dadurch gekennzeichnet, daß
die Carboxymethylverbindung ausgewählt wird unter:

(1) mindestens einer carboxymethylierten pflanzlichen Stärke, die im wesentlichen vernetzungsfrei ist und einen Substitutionsgrad von etwa 0,3 bis etwa 0,57 aufweist,

(2) mindestens einer vernetzten, carboxymethylierten pflanzlichen Stärke, die einen Substitutionsgrad von etwa 0,3 bis etwa 0,8 aufweist,

(3) mindestens einer carboxymethylierten Celluloseverbindung, die einen Substitutionsgrad von etwa 0,3 bis etwa 0,8 aufweist, und

(4) Gemischen davon.

11. Verfahren nach Anspruch 10, wobei Schritt (c) ausgeführt wird durch

(i) Dispergieren mindestens eines gemischten Metallhydroxids mit Schichtstruktur in Teilchenform in einer wäßrigen Flüssigkeit getrennt von der ersten, in Schritt (a) durchgeführten Dispergierung,
(ii) Hydratisierenlassen des dispergierten gemischten Metallhydroxids mit Schichtstruktur und
(iii) Mischen der Dispersion des hydratisierten gemischten Metallhydroxids mit Schichtstruktur mit der ersten Dispersion des hydratisierten Tons unter Erhalt aus einer Bohrspülmittelgrundlage eines wäßrigen Reaktionsprodukts des mineralischen Tons mit dem gemischten Metallhydroxid mit Schichtstruktur.

12. Verfahren nach Anspruch 11, wobei die Teilchen des gemischten Metallhydroxids mit Schichtstruktur mindestens eine hydrophile organische Verbindung in einer Menge enthalten, die ausreichend ist, um die Dispergierung der Teilchen des gemischten Metallhydroxids mit Schichtstruktur in Wasser zu fördern.

13. Verfahren nach Anspruch 10, 11 oder 12, wobei der Substitutionsgrad der Carboxymethylierung bei der substituierten pflanzlichen Stärke, die im wesentlichen vernetzungsfrei ist, etwa 0,4 bis etwa 0,5 und bei der vernetzten, carboxymethylierten pflanzlichen Stärke und der carboxymethylierten Celluloseverbindung etwa 0,7 beträgt.

14. Verfahren nach einem der Ansprüche 10 bis 13, wobei das Additiv zur Kontrolle von Spülmittelverlusten mindestens eine carboxymethylierte Celluloseverbindung ist.

15. Verfahren nach einem der Ansprüche 10 bis 13, wobei das Additiv zur Kontrolle von Spülmittelverlusten mindestens eine carboxymethylierte pflanzliche Stärke ist.

16. Verfahren nach Anspruch 15, wobei die carboxymethylierte pflanzliche Stärke, die vernetzt oder im wesentlichen vernetzungsfrei ist, carboxymethylierte Kartoffelstärke, carboxymethylierte Weizenstärke, carboxymethylierte Reisstärke oder carboxymethylierte Maisstärke oder ein Gemisch davon darstellt.

17. Verfahren nach Anspruch 14 oder 15, wobei die carboxymethylierte pflanzliche Stärke im wesentlichen vernetzungsfrei ist.

18. Verfahren nach nach Anspruch 14 oder 15, wobei die carboxymethylierte pflanzliche Stärke vernetzt ist.

19. Verfahren nach einem der Ansprüche 10 bis 18, wobei der Ton Natriumbentonit ist und das gemischte Metallhydroxid mit Schichtstruktur Glycerin oder Polyglycol in einer Menge enthält, die ausreichend ist, um die Teilchen des gemischten Metallhydroxids mit Schichtstruktur im Wasser zu dispergieren, und das gemischte Metallhydroxid mit Schichtstruktur seinerseits der Formel

$$Li_m D_d T(OH)_{(m+2d+3+na)} A_a^n$$

entspricht, wobei bedeuten:

m  eine Menge Li im Bereich von Null bis etwa 1,

D  ein zweiwertiges Metallion und d eine Menge von D im Bereich von Null bis etwa 4,

T  ein dreiwertiges Metallion und

A  einwertige oder mehrwertige Anionen einer Wertigkeit von -n, wobei a die Menge der Anionen A bedeutet,

wobei

(m+d)  größer als Null und (m+2d+3+na) gleich oder größer als 3 sind.

20. Verfahren nach einem der Ansprüche 10 bis 19, wobei das Bohrspülmittel ferner eine bactericid wirksame Menge Paraformaldehyd, eines Carbamat-Bactericids, Isothiazolin oder eines Gemisches davon enthält.

21. Bohrverfahren zum Niederbringen von Erdbohrlöchern, Boden, das folgende Schritte umfaßt:

(a) Betreiben eines Bohrers zum Eindringen in den Boden zum Niederbringen eines Bohrlochs und

(b) Umwälzen eines Bohrspülmittels nach einem der Ansprüche 1 bis 9 im Bohrloch.

22. Bohrverfahren nach Anspruch 21, wobei das Bohrloch ein Schacht ist.

23. Bohrverfahren nach Anspruch 22, wobei mindestens ein Abschnitt der Schachtbohrung von der Senkrechten durch einen Winkel abweicht, der größer als 45° ist.

24. Bohrverfahren nach Anspruch 23, wobei mindestens ein Abschnitt des Bohrlochs von der Senkrechten um einen Winkel abweicht, der größer als 45° ist.

25. Bohrverfahren nach einem der Ansprüche 21 bis 24, bei dem mindestens ein Teil des Bohrspülmittels nach der Verwendung bei einer ersten Schachtbohrung wiedergewonnen und das wiedergewonnene Bohrspülmittel zu einem späteren Zeitpunkt bei einer zweiten Schachtbohrung, die von der ersten Schachtbohrung entfernt liegt, wiederverwendet wird.

## Revendications

1. Fluide de forage comprenant

(a) une suspension aqueuse d'un produit d'addition ou d'un produit de réaction d'au moins une argile minérale avec au moins un hydroxyde métallique mixte en couches, dans une quantité efficace pour communiquer des propriétés rhéologiques présélectionnées au fluide; et
(B) un composé carboxyméthyle;

caractérisé en ce que ledit composé carboxyméthyle est choisi parmi :

(1) au moins un amidon végétal substitué par carboxyméthyle, essentiellement exempt de réticulation, ayant un degré de substitution d'environ 0,3 à environ 0,57,
(2) au moins un amidon végétal substitué par carboxyméthyle réticulé ayant un degré de substitution d'environ 0,3 à environ 0,8,
(3) au moins un composé cellulosique carboxyméthylé ayant un degré de substitution d'environ 0,3 à environ 0,8, et
(4) des mélanges de ceux-ci.

2. Fluide de forage selon la revendication 1, dans lequel le degré de substitution par carboxyméthyle est d'environ 0,4 à environ 0,5 pour l'amidon végétal substitué essentiellement exempt de réticulation, ou à environ 0,7 pour l'amidon végétal substitué par carboxyméthyle réticulé et le composé cellulosique carboxyméthylé.

3. Fluide de forage selon la revendication 1 ou la revendication 2, dans lequel le réducteur de filtrat est au moins un composé cellulosique carboxyméthylé.

4. Fluide de forage selon la revendication 1 ou la revendication 2, dans lequel le réducteur de filtrat est au moins un amidon végétal carboxyméthylé.

5. Fluide de forage selon la revendication 4, dans lequel l'amidon végétal substitué par carboxyméthyle, réticulé ou essentiellement exempt de réticulation, est la fécule de pomme de terre carboxyméthylée, l'amidon de maïs carboxyméthylé, l'amidon de riz carboxyméthylé et des mélanges de ceux-ci.

6. Fluide de forage selon la revendication 4 ou la revendication 5, dans lequel l'amidon végétal substitué par carboxyméthyle est essentiellement exempt de réticulation.

7. Fluide de forage selon la revendication 4 ou la revendication 5, dans lequel l'amidon végétal substitué par carboxyméthyle est réticulé.

8. Fluide de forage selon l'une quelconque des revendications 1 à 7, dans lequel l'argile est la bentonite sodique; l'hydroxyde métallique mixte en couches inclut le glycérol ou un polyglycol dans une quantité suffisante pour aider à la dispersion de l'hydroxyde métallique mixte en couches particulaire dans l'eau, et l'hydroxyde métallique mixte en couches lui-même correspond à la formule :

$$Li_m D_d T(OH) (m+2d+3+na) A_a^n$$

dans laquelle

m   est une quantité de Li dans le domaine de 0 à environ 1

D   est un ion métallique divalent, et d est une quantité de D dans le domaine de zéro à environ 4;

T   est un ion métallique trivalent;

A   représente des anions monovalents ou polyvalents de valence -n, a étant la quantité d'anions A;

(m+d) est supérieur à zéro et (m+2d+3+na) est égal ou supérieur à 3.

9. Fluide de forage selon l'une quelconque des revendications 1 à 8, comprenant en outre une quantité bactéricide de paraformaldéhyde, un bactéricide carbamate, de l'isothiazoline, ou un mélange de ceux-ci.

10. Procédé de préparation d'un fluide de forage comprenant les étapes consistant à :

(a) disperser au moins une argile minérale dans un fluide aqueux agité pour former une première dispersion;
(b) permettre à l'argile de s'hydrater dans la première dispersion;
(c) faire réagir au moins un hydroxyde métallique mixte en couches avec l'argile hydratée pour former une base de fluide de forage d'un produit de réaction aqueuse de l'argile minérale avec l'hydroxyde métallique mixte disposé en couches; et
(d) disperser dans la base de fluide de forage un composé carboxyméthyle en tant que réducteur de filtrat; caractérisé en ce que ledit composé carboxyméthyle est choisi parmi :
(1) au moins un amidon végétal substitué par carboxyméthyle, essentiellement exempt de réticulation, ayant un degré de substitution d'environ 0,3 à environ 0,57,
(2) au moins un amidon végétal substitué par carboxyméthyle réticulé ayant un degré de substitution d'environ 0,3 à environ 0,8,
(3) au moins un composé cellulosique carboxyméthylé ayant un degré de substitution d'environ 0,3 à environ 0,8, et
(4) des mélanges de ceux-ci.

11. Procédé selon la revendication 10, dans lequel l'étape (c) est réalisée par les étapes consistant à

(i) disperser au moins un hydroxyde métallique mixte en couches sous forme particulaire dans un fluide aqueux, distinct de la première dispersion formée à l'étape (a);
(ii) permettre à l'hydroxyde métallique mixte en couches dispersé de s'hydrater, et
(iii) mélanger la dispersion d'hydroxyde métallique mixte en couches hydraté avec la première dispersion d'argile hydratée pour former une base de fluide de forage d'un produit de réaction aqueuse de l'argile minérale avec l'hydroxyde métallique mixte en couches.

12. Procédé selon la revendication 11, dans lequel l'hydroxyde métallique mixte en couches particulaire inclut au moins un composé organique hydrophile dans une quantité suffisante pour aider à disperser l'hydroxyde particulaire métallique mixte en couches dans l'eau.

13. Procédé selon la revendication 10, la revendication 11 ou la revendication 12, dans lequel le degré de substitution par carboxyméthyle est d'environ 0,4 à environ 0,5 pour l'amidon végétal substitué essentiellement exempt de réticulation, ou à environ 0,7 pour l'amidon végétal substitué par carboxyméthyle réticulé et le composé cellulosique carboxyméthylé.

14. Procédé selon l'une quelconque des revendications 10 à 13, dans lequel le réducteur de filtrat est au moins un composé cellulosique carboxyméthylé.

15. Procédé selon l'une quelconque des revendications 10 à 13, dans lequel le réducteur de filtrat est au moins un amidon végétal carboxyméthylé.

16. Procédé selon la revendication 15, dans lequel l'amidon végétal substitué par carboxyméthyle, réticulé ou essentiellement exempt de réticulation, est la fécule de pomme de terre carboxyméthylée, l'amidon de maïs carboxyméthylé, l'amidon de riz carboxyméthylé et des mélanges de ceux-ci.

17. Procédé selon la revendication 14 ou la revendication 15, dans lequel l'amidon végétal substitué par carboxyméthyle est essentiellement exempt de réticulation.

18. Procédé selon la revendication 14 ou la revendication 15, dans lequel l'amidon végétal substitué par carboxyméthyle est réticulé.

19. Procédé selon l'une quelconque des revendications 10 à 18, dans lequel l'argile est la bentonite sodique; l'hydroxyde métallique mixte en couches inclut le glycérol ou un polyglycol dans une quantité suffisante pour aider à la dispersion de l'hydroxyde particulaire métallique mixte en couches dans l'eau, et l'hydroxyde métallique mixte en couches lui-même correspond à la formule :

$$Li_m D_d T(OH)(m+2d+3+na)A_a^n$$

dans laquelle

m    est une quantité de Li dans le domaine de 0 à environ 1

D    est un ion métallique divalent, et d est une quantité de D dans le domaine de zéro à environ 4;

T    est un ion métallique trivalent;

A    représente des anions monovalents ou polyvalents de valence -n, a étant la quantité d'anions A;

(m+d) est supérieur à zéro et (m+2d+3+na) est égal ou supérieur à 3.

20. Procédé selon l'une quelconque des revendications 10 à 19, dans lequel le fluide de forage comprend en outre une quantité bactéricide de paraformaldéhyde, un bactéricide carbamate, de l'isothiazoline, ou un mélange de ceux-ci.

21. Procédé de pénétration pour la pénétration terrestre incluant les étapes consistant à

(a) faire fonctionner un outil de forage de manière à entraîner une pénétration terrestre pour former un trou de forage, et
(b) faire circuler dans le trou de forage un fluide de forage selon l'une quelconque des revendications 1 à 9.

22. Procédé de pénétration selon la revendication 21, dans lequel le trou de forage est un puits de forage.

23. Procédé de pénétration selon la revendication 22, dans lequel au moins une portion du puits de forage est déviée à un angle supérieur à 45° depuis la verticale.

24. Procédé de pénétration selon la revendication 23, dans lequel au moins une portion du trou de forage est déviée à un angle supérieur à 45° depuis la verticale.

25. Procédé de pénétration selon l'une quelconque des revendications 21 à 24, incluant la récupération d'au moins une portion du fluide de forage après utilisation dans un premier puits de forage et la réutilisation du fluide de forage récupéré à une date ultérieure dans un second puits à l'écart du premier puits.